# EUROPEAN PATENT APPLICATION

(11) **EP 3 428 040 A1**
(43) Date of publication of application: **16.01.2019**
(21) Application number: 17180760.5
(22) Date of filing: 11.07.2017
(51) Int. Cl.: B62B 9/22

(54) **PRAM ROCKER FOR IMPROVED SLEEP OF A BABY**

(71) Applicant: Peramo ApS, 2600 Glostrup (DK)
(72) Inventor: Øvlisen, Karina, 2600 Glostrup (DK); Øvlisen, Niels Wendel, 2600 Glostrup (DK)
(74) Representative: Chas. Hude A/S

(57) **Abstract**

A pram rocker (100) for a pram (1) has a suspension system (17) between a lower chassis (20) and an upper part (10), the pram rocker comprising a first engagement means (110) for engagement with said upper part and a second engagement means (130) for engagement with said chassis, where said first engagement means and second engagement means are interconnected by a connector element (120), and where said pram rocker (100) further comprises an actuation means for acting on said connector element (120) to lengthen and shorten the distance between the first engagement means (110) and the second engagement means (130) alternatingly. By using the pram rocker (100) a sufficiently powerful yet soothing rocking motion is achieved that mimics the rocking motion of a caretaker while freeing up the caretaker to perform other tasks.

## Description

### FIELD OF THE INVENTION

The present invention relates to rockers for prams, strollers, baby carriers and push baby chairs and prams, strollers, baby carriers and push baby chairs with rockers, prams having said rocker attached as well as methods of use of said pram rocker.

### BACKGROUND OF THE INVENTION

Various devices and habits have formed around ensuring that babies get a good and healthy sleep as this is both important to the health of the baby and to the wellbeing of the parents, who often have to put up with abnormal sleeping patterns. In some cultures and countries, babies sleep outside in prams during the day, such as while in day care and kindergarten, and while at home. Sometimes, a problem arises in that a baby cannot fall asleep by itself or while stationary. The problem with sleepless babies is increased for babies with colic, an umbrella-term for sleep abnormality in babies and small children, without many universal remedies. One remedy that seems to help both those suffering from colic as well as other babies is the soothing, rocking motion afforded by caretakers and parents walking with the baby, for example in prams.

However, walking to help a baby fall asleep is a time-consuming and sometimes inconvenient process if for example, the baby is in day care where there is not a caretaker for every baby. Every caretaker that has to leave to soothe a baby to sleep imposes a serious extra workload on the remaining caretakers. Another situation may be if the parents have guests and would rather stay with the guests. Yet another is when the parents desire an hour or two to clean up or have some much needed sleep themselves.

A few solutions have been developed to soothe babies in prams with unassisted aid. One solution puts the front or rear wheels onto an electrically powered ramp that moves in a circular fashion pushing the pram back and forth, and up and down. This method requires a power cable to function and so works only indoors.

Another solution is a vibrating sheet that is attachable around the handlebar of the pram and rocks the pram from side to side. A variant of this is a vibrating insert to the cup holder of the handlebar of the pram. These solutions offer less than stable rocking motions and have an unnatural frequency dependent on the resonant frequencies of the individual prams. When the pram is locked prohibiting the pram from rolling away, these handlebar rockers are significantly limited in their action due to the way this locking action stiffens the pram.

In essence, none of the known solutions successfully emulate the soothing rocking motion of a caretaker or parent walking with the pram and/or soothingly rocking it. Therefore, there is a clear demand for an improved solution not least for babies suffering from colic and their parents and caretakers.

### GENERAL DESCRIPTION

The object of the invention is to solve some of the above-mentioned problems. A pram rocker for a pram having a suspension system between a lower chassis and an upper part is supplied. The pram rocker comprises a first engagement means for engagement with said upper part, characterised by further comprising a second engagement means for engagement with said chassis where said first engagement means and second engagement means are interconnected by a connector element, and where said pram rocker further comprises an actuation means for acting on said connector element to lengthen and shorten the distance between the first engagement means and the second engagement means alternatingly.

Thereby, the pram rocker spans between the chassis and the upper part, whereby the reciprocating motion exerts a periodical force between the lower chassis of the pram and the upper part of the pram acting on the suspension of the pram, whereby the upper part rocks regularly relative to the lower chassis.

In other words, a pram rocker is supplied that emulates a caretaker rocking the pram and sways the pram by pulling the upper part of the pram down or pushing it up relative to the lower chassis repeatedly or in other words, in a cyclic manner. This is effected through the suspension of the pram which gives in to the pram rocker when the pram rocker pulls or pushes on the lower chassis relative to the upper part of the pram, and where the suspension returns the upper part of the pram to its place of rest while no such pull or push is exerted on the suspension by the pram rocker. This produces an effective rocking.

Thereby, a soothing swaying is achieved that is very regular and powerful enough to rock the baby in the pram, while the wheels of the pram may be locked, and the pram is not worn thereby in an unintended manner. Instead, only the suspension is worn which is built to be put out of balance / put under tension. Furthermore, this enables mounting, using and removing the pram rocker without use of tools.

As may be noted, the pram rocker may be mounted on either the upper part and push or pull onto the chassis, or be mounted on the chassis and push or pull onto the upper part.

By pram is meant any wheeled baby vehicle for transportation by pushing or dragging by a caretaker. This includes prams, baby carriages, perambulators, pushchairs, strollers, baby buggies and the like. The pram rocker works best with baby carriages of a type having suspension between an upper and a lower part which is typical in many of these vehicles to smooth the ride for the baby. In the following, perambulator denotes those types of baby transportation means where the baby lies down, these being typically four-wheeled. Strollers on the other hand denotes the transportation means where the baby or child sits upright, typically facing forward, strollers being typically three-wheeled or at least where the rear wheels are larger than the front wheels.

By gearing means is meant the gears, cogs, and/or wheels that are mounted in conjunction with the motor to transform the motion produced by it to the desired output motion having a cycle period. By the motion having a cycle period is meant that the motion is a repeated motion, such as either by rotation or by reciprocal motion, such that the gearing means may be said to have a stroke. This can be achieved in a variety of ways, such as by a simple cam, a barrel cam, a crank and piston type mechanism, or a slotted yoke, or any other convenient method.

Depending on constructional preferences and the rest of the pram rocker the connector element can be a rope, a rod, a pipe, a sheet or net or a combination of these or other elements. The connector element may be connected in one end to an engagement means and in the other end to a pram rocker body that has the actuation means and another of the engagement means incorporated into it. The connector element may also be divided into two separate lengths on either side of the actuation means to connect the first and second engagement means. The individual parts of the connector element may take any convenient length.

By actuation means is meant any kind of mechanism that allows acting actively on the connector element, such as a motorised solution or any other suitable kind of solution. Thereby, it is understood that the force exerted is regular and non-decaying, or, in other words, it is not simply a spring or an elastic band or some other passive mechanism. Instead, the actuation means exerts an active force.

In an embodiment, the kinetic energy takes the shape of rotational or reciprocating motion pushing or pulling onto said connector element to achieve said rocking motion. Thereby, a direct and simple force transmission is achieved. In an embodiment, the kinetic energy takes the shape of reciprocating motion. Thereby, an especially simple construction is achieved, where the forces exerted on the pram have substantially no angular component thus keeping the rocking motion in a plane.

In an embodiment, the gripping part is a grabbing hook for attaching the rocker to a carrycot and/or a handlebar of said upper part. Thereby, a simple yet effective construction is achieved for the pram rocker that is furthermore safe in use.

In an embodiment, the motor is an electrical motor. In an embodiment, the motor is a DC motor. In an embodiment, the pram rocker further comprises a battery receiving means and/or a rechargeable battery. Then, the motor receives its energy input as electrical current from batteries and/or said rechargeable battery. This allows the pram rocker to be portable and useable for outdoor use. For example, two mothers wishing to go to a cafe may then use the pram rocker while they are at the cafe on prams placed outside the cafe.

In an embodiment, the pram rocker further comprises a worm drive between the motor and the connector element. Thereby, two major benefits are achieved. Firstly, the torque is increased for the pram rocker which enables a less powerful and therefore lighter and less noisy motor to operate the pram rocker and rock the pram than would otherwise be required, and the motor lifespan is increased. Secondly, the worm drive itself operates quietly which helps to avoid disturbing the baby which should be able to sleep despite the noise of the motor. Instead, a pleasing humming is produced.

In an embodiment, at least a worm bushing of said worm drive is made of brass. Thereby, even more quiet operation and durability are achieved. In an embodiment, the worm wheel is made of brass. Thereby, the teeth-on-teeth action of the worm drive takes advantage of the quietness and lubrication-free nature of brass.

In an embodiment, the pram rocker further has a crank means to convert rotational motion to reciprocating motion. Thereby, an efficient force transmission is achieved.

In an embodiment, the pram rocker comprises a worm drive in conjunction with a crank means to translate rotational motion from a motor to the reciprocating motion of the connector element. Thereby a quiet, efficient and small form factor pram rocker is achieved that is adapted to rock a pram rhythmically and that is powerful enough to rock a pram adequately, furthermore doing so by leveraging the existing suspension system of the pram.

In an embodiment, the cycle period is adjustable. Thereby, the rocking speed may be adjusted to the baby. In an embodiment, the rocking speed may be adjusted combined with the force exerted on the connector element. Thereby, an even more fine-tuned adjustment may be made to the individual baby. In an embodiment, adjusting the speed automatically adjusts the exerted force, where high speeds / low cycle times produce low degrees of force exerted, and low speeds / high cycle times produce larger forces. Thereby, the natural force of the suspension may be taken into account, and a bumpy / uneven experience is avoided or made less likely.

In a preferred embodiment, the cycle period of the pram rocker is above 0.5 seconds. This has been found to be an effective cycle period, whereby a calm rocking motion is achieved. In a preferred embodiment, the cycle period of the pram rocker is below 0.75 seconds. This has been found to be an effective cycle period, whereby a sufficiently insisting rocking motion is produced. Surprisingly, babies require a quite significant and intense rocking motion to be effectively relaxed. In a preferred embodiment, the cycle period of the pram rocker is about 0.6 seconds. This has been found to be an effective cycle period achieving a calm but sufficiently intense rocking motion. In an embodiment, the actuation means comprises a motor and gearing means achieving the desired cycle period.

As the cycle period may be altered with the weight of the pram and / or the tightening of the connector element, the cycle period should be measured without any external weight.

In an embodiment, the connector element has an adjustable length. Thereby, the pram rocker is adjustable to several different makes of prams. Further, this has been found to be a simple and effective way of adjusting the force exerted on the pram thus increasing or decreasing the rocking motion.

In an embodiment, the connector element is a rope. This embodiment can be used with any type of pram rocker according to the invention and is especially advantageous where the gripping means is a grabbing hook adjusted to grab onto the upper part of the pram, especially the carrycot or handlebar of the pram. The connector element being a rope is then adapted to fasten to the chassis being below the upper part. Thereby, gravity keeps the pram rocker and rope in place, and it is simple to mount the rope to the chassis. Thereby, a simple and space-saving pram rocker is achieved.

In an embodiment, the pram rocker further has an adjustable timer, where the pram rocker turns off if the timer is set and has reached a predetermined time. Thereby, the caretaker or parent can turn on the pram rocker and leave it to turn itself off after a given time.

In an embodiment, the pram rocker further has a processing unit allowing electrical communication and a wireless transmitter and receiver, whereby a user may connect to said pram rocker using a wireless protocol to control said pram rocker. Thereby, a parent or caretaker may control the pram rocker remotely to turn it off. Further embodiments thereof can be used individually or in combination. The pram rocker may comprise a speaker to play music or sounds to help the baby fall asleep; a microphone to inform the caretaker or parent if the baby is crying; a camera to film the baby; and/or a database of baby user profiles, where the pram rocker operates according to the specific baby user profile for any given baby selected by the caretaker or parent remotely and in advance. In an embodiment where the pram rocker comprises at least a processing unit and a microphone, the pram rocker is adapted to begin rocking the baby when it registers a predetermined sound pattern from the baby, such as when the baby begins crying, or when the baby shuffles around in the bed.

In an aspect of the invention, it relates to a pram having a pram rocker as mentioned. The pram rocker may be built into the pram as a non-removable part, or it may be mounted onto the pram as previously described.

In an aspect of the invention, it relates to a method of helping a baby falling asleep or relaxing in a pram, the pram having a suspension system between a lower chassis and an upper part. The method comprises providing a pram rocker with a first engagement means and a motor for transforming a received electrical current to motion, mounting said pram rocker onto said upper part or to said chassis by way of said first engagement means, wherein further providing a gearing means adapted to transform said motion from said motor to reciprocating motion having a cycle period and transmitting said reciprocating motion, providing a connector element for receiving said reciprocating motion, providing a second engagement means connected to said connector element, attaching said attachment means to said chassis or said upper part, whereby said pram rocker spans between said chassis and said upper part. Thereafter, said pram rocker is turned on, whereby an electric current is transmitted to said motor which provides a motion to said gearing means, the gearing means transforming said motion to reciprocating motion, said reciprocating motion exerting a periodical force between the chassis and the upper part, the force acting on the suspension system of the pram, whereby the upper part rocks regularly relative to the chassis.

### SHORT LIST OF THE DRAWINGS

In the following, example embodiments are described according to the invention, where
Fig. 1 illustrates a pram rocker according to the invention,
Fig. 2A and 2B illustrate rocking a pram using a pram rocker according to the invention,
Fig. 3 illustrates a mechanism for gearing and power transfer according to the invention,
Fig. 4 illustrates various alternative uses and embodiments according to the invention.

### DETAILED DESCRIPTION OF DRAWINGS

In the following, the invention is described in detail through embodiments thereof that should not be thought of as limiting to the scope of the invention.

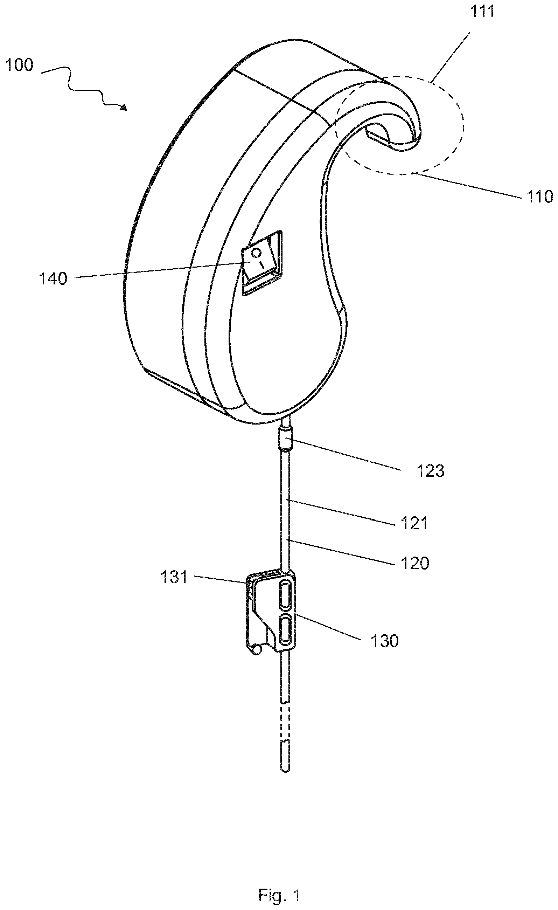

Fig. 1 illustrates a pram rocker 100 according to the invention. The pram rocker 100 has a grabbing hook 111 that can be hung onto an upper part of a pram and will remain hanging by gravity. When the grabbing hook has been hung onto an upper part, a rope 121 can be fastened to a lower part or chassis. The rope 121 can simply be conducted around a part of the chassis and then back upwards and through the frictional engagement 131 of the second engagement means 130. The rope 121 should be tightened so that it hangs stretched between the body of the pram rocker 100 and the chassis. Pressing the power button 140 afterwards then turns on an internal motor which drives a gearing mechanism moving the rope 121 up and down in a reciprocating motion thus stretching and slacking the rope 121 which in turn puts a force onto the upper part of the pram and the chassis thus affecting the suspension between these two parts to produce a rhythmic, rocking motion. A rope stopper 123 maintains alignment of the rope relative to the body of the pram rocker 100 as well as indicates to the user the current length of the rope 121. The reciprocal motion of one embodiment of the invention may be considered sinusoidal, with the lowest speed at the outermost and innermost positions of the rope stopper 123 and with the highest speed between these two outermost positions. Thereby, an even smoother rocking motion is achieved.

While the pram rocker 100 is attached to the upper part 10 of the pram 1 by the grabbing hook 111, it is easy to fasten it to the chassis 20 as well thus making the pram rocker 100 user-friendly. Further, the body of the pram rocker 100 is sealed against the elements, and it is powered by batteries, whereby it may be used outside even when it is raining.

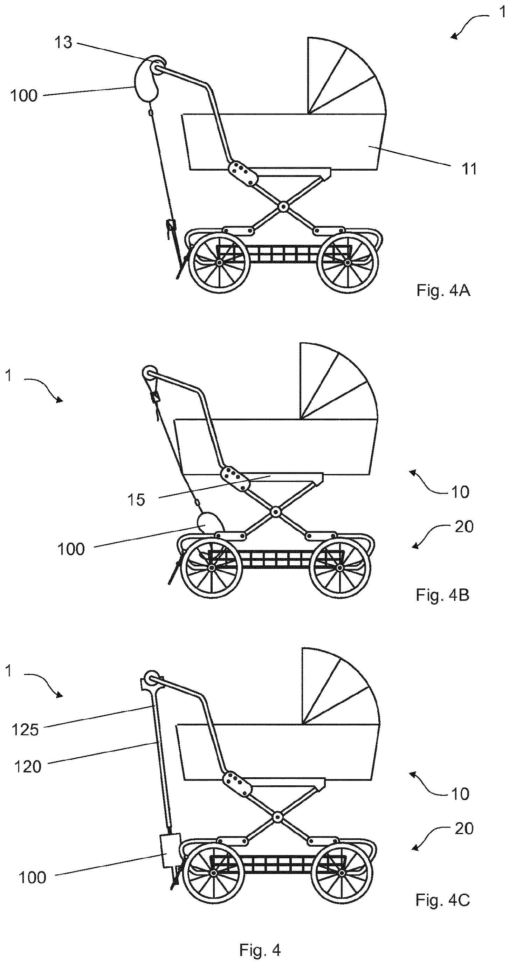

In addition to a rope 121, any other types of connector elements 120 may be envisioned, and an example will be shown in relation to Fig. 4C. Also, in addition to a grabbing hook 111, any type of first engagement means 110 may be used, such as clamps, hook-and-loop fasteners, non-permanent fasteners, or even permanent attachment by screws, bolts or welding. In one embodiment, grabbing hooks have been found to be convenient and preferable.

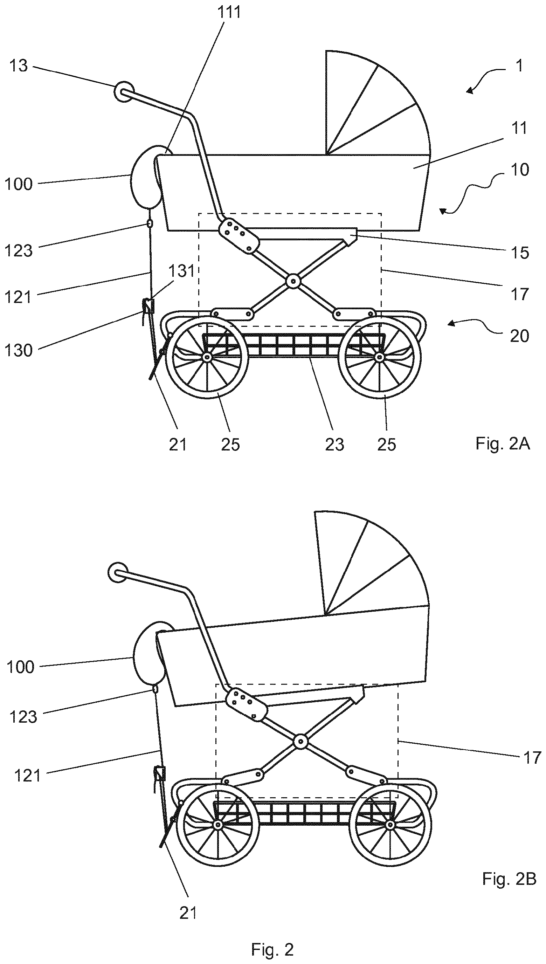

Fig. 2 illustrates in more detail rocking a pram 1 using a pram rocker 100 according to the invention and as illustrated in Fig 1. The upper part 10 of the pram rocker has a carrycot 11 for providing a protective and soft bed for a baby, as well as a handlebar 13 for pushing and controlling the pram 1. Further, the upper part 10 has an upper frame 15 for holding the carrycot 11, the upper frame 15 being suspended over the chassis 20 by way of a suspension system 17. The chassis 20 has a lock rod 21, a basket 23 and wheels 25. The lock rod 21 allows releasable attachment against the wheels 25 frictionally prohibiting rolling of the wheels 25. The basket 23 is provided to allow carrying stuff in the pram 1.

In Fig. 2A, the grabbing hook 111 of the pram rocker 100 has been hung on the edge of the carrycot 11 of the upper part 10 of the pram 1, and the rope 121 has been fastened around the lock rod 21 of the chassis 20 extending back up to the second engagement means 130, there attached through the frictional engagement 131.

In Fig. 2B, the pram rocker 100 has been turned on, and the rope 121 is retracted into the pram rocker. The motion of the rope is controlled by the rope stopper 123. This pull between the upper part 10 and the chassis 20 puts a force on the suspension system 17, whereby the front side of the upper part 10 is forced downwards. As the rope 121 moves out of the pram rocker 100 again, the rope 121 is slackened, and the force onto the suspension system 17 is reduced, whereby a state of rest for the suspension system 17 is re-established. Thereafter, the pram rocker 100 retracts the rope 121 again which puts a force on the suspension system, and so on, rocking a baby in the pram 1 to sleep or at least relaxation.

By attaching the pram rocker between the carrycot 11 and the chassis 20, the action produced by the pram rocker is relatively close to the centre of gravity of the pram and the movement becomes predictable and stable thus providing a soothing rocking motion. By providing the pram rocker 100 on the upper part 20 and therefore above the suspension system 17, the force required to bring the suspension system 17 out of a state of rest is reduced.

While it is preferred to have a designated suspension system 17 as the one depicted in Figs. 2A and 2B, the invention works adequately with the natural flexibility of a pram 1 such as the upper part 10 and/or chassis 20 of the pram 1. Further, the pram rocker may be envisioned to be fastened to the upper part of the pram by the first engagement means 110 not necessarily being a grabbing hook 111 and to an object next to the pram 1 with the second engagement means 130. Thereby, not only the suspension system 17 between the upper part 10 and the chassis 20 may be relied upon to rock the pram 1, but also between the chassis 20 and the ground, such as the wheels 25.

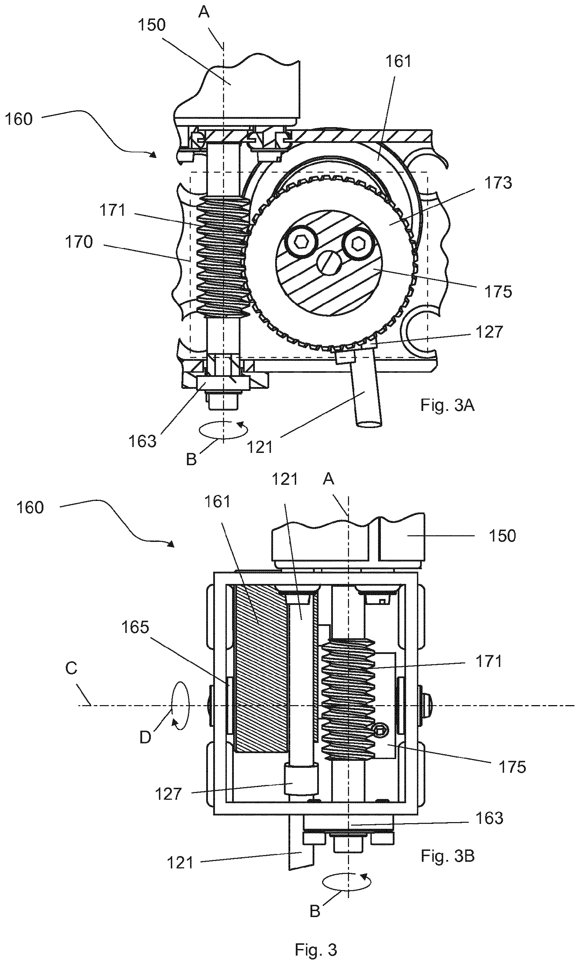

Figs. 3A and 3B illustrate a gearing means 160 according to the invention. Fig. 3A illustrates an electrical motor 150 providing rotational movement B to a rod around axis A, the rod being attached to a worm bearing 163. Connected to the electrical motor 150 is a worm drive 170. The rotational movement B provides rotation to a worm 171 which drives the worm wheel 173. This provides significant gearing thus helping the electrical motor 150 drive the relatively high load of rocking the pram 1. Another very significant advantage of the worm drive 170 is that it operates quietly. A rope rail 161 is mounted to the worm wheel 173 through a worm bushing 175 which will be seen more clearly perhaps in Fig. 3B.

Fig. 3B illustrates the same gearing means 160 from a different angle. The worm 171 is driven by the electrical motor 150, and the worm wheel 173, not visible in Fig. 3B, is driven by the worm 171. The worm wheel 173 rotates around axis C. The rotation D around axis C is transplanted to the worm bushing 175 and thereby to the rope rail 161 on which the rope 121 is mounted and fixed by rope fastener 127. The rope rail 161 is mounted off-centre on the worm bushing 175 which forces the rope rail 161 to travel in a circular fashion around the axis C. When the rope rail 161 is in a position as depicted in Figs. 3A and 3B, the rope is retracted into the pram rocker 100. When, however, the worm wheel 173, the worm bushing 175 and the rope rail 161 have travelled half a rotation around axis C, the rope rail 161 will have been brought to its lowermost position, and the rope will have been extended farther out of the pram rocker 100. The parts rotating around axis C are mounted securely through a worm wheel bearing 165. This off-centre placement of the rope rail 161 provides a convenient and easy way to achieve a reciprocating motion of the rope 121 that is furthermore sinusoidal and therefore smooth. This may be seen as a variation of a crank mechanism.

Fig. 4 illustrates various alternative uses and embodiments of the invention.

Fig. 4A illustrates fastening the pram rocker to the handlebar 13 of the pram 1 instead of the carrycot 11. Thereby, a smaller motor may be used as required momentum decreases.

Further, it may be advantageous for other reasons, such as using the pram rocker 100 with a stroller, which may not have a carrycot 11 edge to mount the pram rocker 100 onto.

Fig. 4B illustrates fastening the pram rocker to the chassis 20 instead of the upper part 10 of the pram rocker 1. Thereby, the weight of the pram rocker is placed even more centrally, aligned with the centre of mass of the pram or at least lower thus providing a more controlled rocking motion. This may for example be combined with more resiliently affixing the pram rocker 100 to the chassis 20, such that it is not necessary to fix it anew when its use is desired, and only the rope 121 / connector element 120 needs to be attached on use. Furthermore, the pram rocker 100 may be built into pram 1 and may for example be attached between the chassis 20 and the upper frame 15.

Fig. 4C illustrates an embodiment wherein the pram rocker 100 has a rod 125 for its connector element 120 instead of a rope 121. A spring-like mechanism or other quick extension of the rod to affix it firmly between the chassis 20 and the upper part 10 may easily be envisioned. Thereby, more durable materials may be used. Of course, these embodiments may be used in conjunction or separately as is convenient for a particular application.

## Claims

1. A pram rocker (100) for a pram (1) having a suspension system (17) between a lower chassis (20) and an upper part (10), the pram rocker (100) comprising:
- a first engagement means (110) for engagement with said upper part (10), **characterised by** further comprising a second engagement means (130) for engagement with said chassis (20),
- where said first engagement means (110) and second engagement means (130) are interconnected by a connector element (120), and
- where said pram rocker (100) further comprises an actuation means for acting on said connector element (120) to lengthen and shorten the distance between the first engagement means (110) and the second engagement means (130) alternatingly.

2. A pram rocker (100) according to claim 1, where said actuation means comprises a motor (150) for acting on said connector element (120), and where said motor (150) is adapted for transforming a received input energy to kinetic energy.

3. A pram rocker (100) according to claim 2, where said actuation means further comprises gearing means (160) for receiving said kinetic energy from said motor (150) and converting it to reciprocating motion with a cycle period and transmitting it to said connector element (120).

4. A pram rocker (100) according to claim 3, wherein the gearing means (160) comprises a worm drive (170) between the motor (150) and the connector element(120).

5. A pram rocker (100) according to any of claims 3-4 further comprising a crank mechanism (161, 175) between the motor (150) and the connector element (120).

6. A pram rocker (100) according to any of claims 2-5 further comprising a battery receiving means and/or a rechargeable battery for providing an electrical current to said motor (150).

7. A pram rocker (100) according to claims 1-6, wherein said first and second engagement means (110, 130) are for releasable engagement.

8. A pram rocker (100) according to any of claims 1-7, wherein the first engagement means (120) is a grabbing hook (111) for attaching the pram rocker (100) to a carrycot (11) and/or a handlebar (13) of said upper part (10).

9. A pram rocker (100) according to any of claims 3-7, wherein the cycle period of the reciprocating motion is above 0.25 seconds, preferably above 0.5 seconds.

10. A pram rocker (100) according to any of claims 1-9, wherein said connector element (120) has an adjustable length.

11. A pram rocker (100) according to any of claims 1-10, wherein said connector element (120) is a rope (121).

12. A pram rocker (100) according to any of claims 1-11 further having an adjustable timer, where the pram rocker (100) turns off if the timer is set and has reached a predetermined time.

13. A pram rocker (100) according to any of claims 1-12 further having
- a processing unit allowing electrical communication and
- a wireless transmitter and receiver, whereby a user may connect to said pram rocker (100) using a wireless protocol to control said pram rocker (100).

14. A pram (1) having a pram rocker (100) according to any of claims 1-13.

15. A method of helping a baby falling asleep or relaxing in a pram (1), the pram having a suspension system (17) between a lower chassis (20) and an upper part (10), the method comprising the steps:
- providing a pram rocker (100) with a first engagement means (110) for engagement with said upper part (10), a second engagement means (130) for engagement with said chassis (20) and a connector element (120) interconnecting said first engagement means (110) and said second engagement means (130) for lengthening and shortening the distance between the first engagement means (110) and the second engagement means (130) alternatingly,
- mounting said pram rocker (100) onto said upper part (10) by way of said first engagement means (110),
- mounting said second engagement means (130) to said chassis (20), whereby said pram rocker (100) spans between said chassis (20) and said upper part (10), and
- actuating said connector element by exerting a periodical force between the chassis (20) and the upper part (10), the force acting on the suspension system (17) of the pram (1), whereby the upper part (10) rocks regularly relative to the chassis (20).
